(19) Europäisches Patentamt / European Patent Office / Office européen des brevets

(11) **EP 4 353 085 A1**

(12) **EUROPEAN PATENT APPLICATION**
published in accordance with Art. 153(4) EPC

(43) Date of publication:
**17.04.2024 Bulletin 2024/16**

(21) Application number: **22804796.5**

(22) Date of filing: **23.05.2022**

(51) International Patent Classification (IPC):
***A23L 2/00*** *(2006.01)*

(52) Cooperative Patent Classification (CPC):
**A23L 2/00**

(86) International application number:
**PCT/JP2022/021092**

(87) International publication number:
**WO 2022/244889 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2021  JP 2021086301**

(71) Applicant: **The Coca-Cola Company Atlanta, GA 30313 (US)**

(72) Inventor: **HONMA, Yuji Tokyo 150-0002 (JP)**

(74) Representative: **Dehns
St. Bride's House
10 Salisbury Square
London EC4Y 8JD (GB)**

(54) **JELLY-CONTAINING BEVERAGE AND METHOD FOR MANUFACTURING SAME**

(57)     Provided is a method for manufacturing a packaged jelly-containing beverage, said manufacturing method including manufacturing a jelly-containing beverage by individually sterilizing a liquid A containing a cation-reactive gelling agent and a liquid B that contains a cation, then filling the liquids into the same container and mixing the liquid A and the liquid B in the container, the liquid A being essentially devoid of a hardly soluble calcium salt, the pH of the liquid A after sterilization being 2.0 to less than 5.5, the viscosity after sterilization of the liquid A measured using a single-cylinder rotational viscometer at a temperature of 25°C being 5-150 mPa·s, and the viscosity after sterilization of the liquid B measured using a single-cylinder rotational viscometer at a temperature of 25°C being 10 mPa·s to less than 50 mPa·s.

EP 4 353 085 A1

**Description**

**Technical Field**

The present invention relates to a jelly-containing beverage and a method for manufacturing the same.

**Background Art**

In recent years, the market for ready-to-drink (RTD) beverages has continued to expand. It is most common for RTD beverages have a single liquid color, but there are also many products on the market that have multiple liquid colors, which include solids, such as jelly, in addition to liquid.

Patent Document 1 describes a method for manufacturing a jelly-containing beverage by mixing a solution containing a cation reactive gelling agent with a solution containing a dairy component.

Patent Document 2 describes a method for preparing gel pieces with a uniform size by adding an acidic solution to a liquid mixture of a polysaccharide solution and a solution containing a metal salt.

**Prior Art Documents**

**Patent Documents**

Patent Document 1: JP 2016-189738 A
Patent Document 2: JP 2019-054744 A

**Summary of the Invention**

Patent Document 1 describes a method for producing jelly in which a poorly soluble calcium salt is blended in a solution with a pH of 6.5 to 8.5 containing a cation reactive gelling agent, and a gelation reaction occurs at a desired timing by utilizing a decrease in pH, resulting from heat sterilization, to dissolve the poorly soluble calcium salt, but due to the properties of the poorly soluble calcium salt, the pH range of the solution was limited to the neutral range (for example, paragraph [0019]).

Furthermore, the gel pieces obtained by the method in Patent Document 2 were not of a sufficient size (for example, paragraph [0014], Tables 1 and 2).

The present invention provides a novel jelly-containing beverage that is acidic and has multiple liquid colors, and a method for manufacturing the same.

By virtue of the present invention, the following method for manufacturing a jelly-containing beverage and the like can be provided.

1. A method for manufacturing a packaged jelly-containing beverage comprising:
individually subjecting a liquid A containing a cation reactive gelling agent and a liquid B containing cations to sterilization treatment, then filling the same container with the liquids A and B, and mixing the liquid A and liquid B in the container to manufacture a jelly-containing beverage, wherein:

the liquid A is substantially free of poorly soluble calcium salts;
the pH of the liquid A after sterilization treatment is 2.0 to less than 5.5;
the viscosity of the liquid A after sterilization treatment, measured at a temperature of 25°C, using a single cylinder rotational viscometer, is 5 mPa·s to 150 mPa·s; and
the viscosity of the liquid B after sterilization treatment, measured at a temperature of 25°C, using a single cylinder rotational viscometer, is 10 mPa·s to less than 50 mPa·s.

2. The manufacturing method according to 1, wherein the liquid constituting the jelly-containing beverage has a pH of 2.5 to 4.5.

3. The manufacturing method according to 1 or 2, wherein the pH of the liquid A before sterilization treatment is 2.0 to less than 6.5.

4. The manufacturing method according to any of 1 to 3, wherein the amount of the cation reactive gelling agent in the liquid A is 0.1 mass% to 2.0 mass%.

5. The manufacturing method according to any of 1 to 4, wherein the cation reactive gelling agent comprises one or more selected from the group consisting of pectin, carrageenan, gellan gum, and alginic acid.

6. The manufacturing method according to any of 1 to 5, wherein the liquid B comprises 4.5 mmol/L or more of calcium ions.

7. The manufacturing method according to any of 1 to 6, wherein the specific gravity $SG_A$ of the liquid A and the specific gravity $SG_B$ of the liquid B satisfy the following formula (1).

$$SG_A/SG_B > 1 \qquad\qquad (1)$$

8. The manufacturing method according to 7, wherein the container is filled with the liquid B after being filled with the liquid A.

9. The manufacturing method according to any of 1 to 6, wherein the specific gravity $SG_A$ of the liquid A and the specific gravity $SG_B$ of the liquid B satisfy the following formula (2).

$$SG_A/SG_B < 1 \qquad\qquad (2)$$

10. The manufacturing method according to 9, wherein the container is filled with the liquid A after being filled with the liquid B.

11. The manufacturing method according to any of 1 to 10, wherein the color of the liquid A and the color of the liquid B are different.

12. The manufacturing method according to any of 1 to 11, wherein the temperature of the liquid A when filling the container is no higher than the gelling temperature of the cation reactive gelling agent.

13. The manufacturing method according to any of 1 to 12, wherein the amount of the liquid A, with respect to the total of the liquid A and the liquid B, is 70 mass% or less.

14. A packaged jelly-containing beverage manufactured by the manufacturing method according to any of 1 to 13.

15. A packaged jelly-containing beverage, wherein a jelly in the beverage and a liquid constituting the beverage present mutually different colors and present a marbled appearance.

16. The beverage according to 15, wherein the liquid constituting the jelly-containing beverage has a pH of 2.5 to 4.5.

17. The beverage according to 15 or 16, wherein the jelly is formed by gelling a cation reactive gelling agent.

18. The beverage according to any of 15 to 17, comprising one or more selected from the group consisting of pectin, carrageenan, gellan gum, and alginic acid.

19. The beverage according to 18, further comprising calcium ions.

20. The beverage according to any of 15 to 19, wherein the container is made from PET.

By virtue of the present invention, a novel jelly-containing beverage that is acidic and has multiple liquid colors, and a method for manufacturing the same can be provided.

**Brief Description of Drawings**

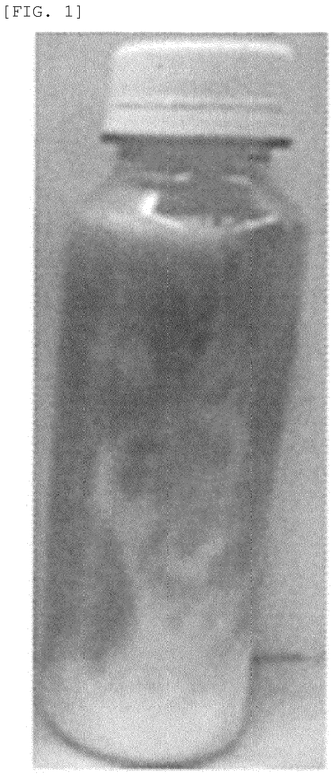

[FIG. 1] is a photograph showing a packaged jelly-containing beverage manufactured in Example 1.

**Modes for Carrying Out the Invention**

Hereafter, embodiments of the method for manufacturing the jelly-containing beverage and the like of the present invention are described.

[Method for manufacturing a jelly-containing beverage]

The method for manufacturing a jelly-containing beverage according to one aspect of the present invention comprises: individually subjecting a liquid A containing a cation reactive gelling agent and a liquid B containing cations to sterilization treatment, then filling the same container with the liquids A and B, and mixing liquid A and liquid B in the container.

When the liquid A and liquid B are thereby mixed in the container, a gelation reaction first occurs when the gelling agent and the cations react, enabling a jelly to be produced in the container. The gelling agent in the liquid A and the cations in the liquid B come into contact with each other at arbitrary random locations in the container as a result of the mixing, whereby a jelly-containing beverage having a marbled appearance can be manufactured.

Here, the term "marbled" means a pattern in which streamline shapes such as spirals and streaks are overlapped and intertwined. The jelly-containing beverage obtained by the manufacturing method of the present invention presents a marbled appearance as a result of randomly combining a jelly portion that has set and a liquid beverage portion and, for example, presents an appearance such as in FIG. 1. In FIG. 1, the white portion is the liquid beverage portion and the black to gray portion is the jelly portion.

In one embodiment, the sterilization treatment can be performed by heat sterilization such as high temperature sterilization, chemical sterilization, electron beam sterilization, or the like.

In conventional methods for manufacturing packaged beverages, sterilization treatment was performed after all of the components that constitute the beverage had been filled into a container, and therefore containers capable of withstanding sterilization temperatures (for example, cans and bottles) were necessary. However, in the method for manufacturing a packaged jelly-containing beverage according to one aspect of the present invention, sterilization treatment of each of the components can be performed before filling into the container, and therefore the container is not required to be heat resistant, but rather plastic containers (plastic bottles) of polyethylene terephthalate (PET), polypropylene, and the like can be used.

In one embodiment, the specific gravity $SG_A$ of the liquid A and the specific gravity $SG_B$ of the liquid B satisfy the following formula (1).

$$SG_A/SG_B > 1 \qquad (1)$$

When the specific gravity $SG_A$ of the liquid A and the specific gravity $SG_B$ of the liquid B satisfy formula (1), it is preferable that the container is filled with the liquid B after being filled with the liquid A.

The liquid A and the liquid B are thereby suitably mixed with each other, and gelation occurs as a result of the gelling agent in the liquid A and the cations in the liquid B coming into contact with each other at arbitrary random locations in the container, enabling a jelly-containing beverage having a marbled appearance to be manufactured.

In one embodiment, the specific gravity $SG_A$ of liquid A and the specific gravity $SG_B$ of liquid B satisfy the following formula (2).

$$SG_A/SG_B < 1 \qquad (2)$$

When the specific gravity $SG_A$ of the liquid A and the specific gravity $SG_B$ of the liquid B satisfy formula (2), it is preferable that the container is filled with the liquid A after being filled with the liquid B.

The liquid A and the liquid B are thereby suitably mixed with each other, and gelation occurs as a result of the gelling agent in the liquid A and the cations in the liquid B coming into contact with each other at arbitrary random locations in the container, enabling a jelly-containing beverage having a marbled appearance to be manufactured.

In one embodiment, the color of liquid A and the color of liquid B are different.

The visibility of the marbling is thereby improved, enabling a jelly-containing beverage with excellent aesthetics to be manufactured.

The details of each liquid will be described below.

[Liquid A]

Liquid A contains a cation reactive gelling agent.

Consequently, a gelation reaction occurs as a result of mixing with the liquid B, which comprises cations, and jelly can be produced.

The pH of liquid A after sterilization treatment is 2.0 to less than 5.5, preferably 3.0 to 5.2, and more preferably 3.6 to 5.0.

The sourness of the jelly-containing beverage can thereby be limited to a range suitable for beverages while improving the strength of the jelly obtained by the gelation reaction. Furthermore, it will be possible to manufacture a jelly-containing beverage using acidic ingredients such as fruit juice.

The viscosity of the liquid A after sterilization treatment is 5 mPa·s to 150 mPa·s, preferably 8 mPa·s to 120 mPa·s, and more preferably 12 mPa·s to 100 mPa·s.

By setting the viscosity of the liquid A within the aforementioned range and combining it with a liquid B having the viscosity described below, the mixing of the liquid A and the liquid B with each other can be controlled, and it becomes easier to form continuous large jellies while mixing with the liquid. A jelly-containing beverage having a marbled appearance can thereby be manufactured.

It is also possible to give the jelly portion and liquid portion different flavors, whereby complex tastes and textures can be made.

In the present invention, "viscosity" refers to viscosity measured using a single cylinder rotational viscometer at a measurement temperature of 25°C, using an M1 rotor under conditions of 100 rpm.

The viscosity after sterilization treatment can be measured by the method described in the examples.

The liquid A is substantially free of poorly soluble calcium salts.

Consequently, even if the pH of the liquid A before sterilization treatment is 6.5 or less, the viscosity of the liquid A can be adjusted to the desired range. Furthermore, even if the pH of the liquid A after sterilization treatment is 5.5 or less, the viscosity of the liquid A can be adjusted to the desired range.

"Substantially free of" means that the liquid A is entirely free of poorly soluble calcium, or the amount of poorly soluble calcium is preferably less than 0.0003 mass% and more preferably less than 0.0001 mass%, with respect to all of the liquid A. For example, poorly soluble calcium included as an inevitable impurity in ingredients such as fruit juice constituting the beverage may be included in the liquid A.

The pH of liquid A before sterilization treatment is 2.0 to less than 6.5, preferably 2.5 to 6.0, and more preferably 3.0 to 5.5.

In one embodiment, with a view to obtaining a gel with appropriate hardness, the amount of the cation reactive gelling agent included in the liquid A, with respect to all of the liquid A, may be 0.1 mass% or more, 0.2 mass% or more, or 0.4 mass% or more, and may be 2.0 mass% or less, 1.0 mass% or less, or 0.6 mass% or less.

For example, in terms of ranges for the amount of the cation reactive gelling agent included in the liquid A with respect to all of the liquid A, 0.1 mass% to 2.0 mass% or 0.2 mass% to 1.0 mass% can be mentioned.

In one embodiment, for example, one or more selected from the group consisting of pectin, carrageenan, gellan gum, and alginic acid can be mentioned as the cation reactive gelling agent, but this is not particularly limited as long as it is a gelling agent which has the property of reacting with cations to form a gel. A cation reactive gelling agent may be used alone, or may be used in combination with another gelling agent that is not cation reactive, including thickeners such as guar gum.

In one embodiment, the cation reactive gelling agent preferably comprises one or more selected from the group consisting of pectin, carrageenan, gellan gum, and alginic acid.

In one embodiment, the cation reactive gelling agent preferably is not reactive with monovalent cations but is reactive with divalent or higher cations.

The cation reactive gelling agent is more preferably LM pectin, as this is stable under acidic conditions and the gelation reaction time is relatively short.

LM pectin refers to pectin in which the ratio of galacturonic acid methyl ester to the total of galacturonic acid methyl ester and galacturonic acid constituting the pectin molecule (degree of esterification) is less than 50%.

In one embodiment, the temperature of the liquid A when filling the container is no greater than the gelling temperature of the cation reactive gelling agent.

The liquid A and the liquid B are thereby suitably mixed with each other, and gelation occurs as a result of the gelling agent in the liquid A and the cations in the liquid B coming into contact with each other at arbitrary random locations in the container, enabling a jelly-containing beverage having a marbled appearance to be manufactured.

In one embodiment, the content of the liquid A with respect to the total of the liquid A and the liquid B is no greater than 70 mass%, preferably no greater than 60 mass%, and more preferably no greater than 55 mass%.

The liquid A and the liquid B are thereby suitably mixed, and a jelly-containing beverage having a marbled appearance can be manufactured.

Within ranges in which the effects of the present invention are not compromised, the liquid A may also comprise components commonly used in the manufacture of jelly-containing beverages, other than the components described above. For example, sweeteners, acidulants, fruit juices, flavorings, colorants, preservatives, pH adjusters, emulsifiers, various stabilizers, solids (for example fruit, dietary fiber, nata de coco, and the like), antioxidants, nutritional fortifiers (vitamins or the like), lactic acid bacteria, thickeners and the like may be included.

There are no limitations on the method for preparing the liquid A, and a base ingredient such as water or liquid sugar may be used as a solvent or dispersion medium, in which the gelling agent and other components, which are added as necessary, may be mixed and dissolved or dispersed.

[Liquid B]

The liquid B comprises cations.

Consequently, by mixing with the liquid A comprising a cation reactive gelling agent, a gelation reaction occurs and a jelly can be produced.

The viscosity of liquid B after sterilization treatment is 10 mPa·s to less than 50 mPa·s, preferably 11 mPa·s to less than 40 mPa·s, and more preferably 12 mPa·s to less than 30 mPa·s.

By setting the viscosity of the liquid B within the aforementioned range and combining it with the liquid A having the viscosity described above, mixing of the liquid A and the liquid B with each other can be controlled, and it becomes easier to form continuous large jellies while mixing with the liquid. A jelly-containing beverage having a marbled appearance can thereby be manufactured.

Furthermore, when ingredients such as sweeteners and fruit juices are used, a jelly-containing beverage can be manufactured without significantly degrading the flavor of the ingredients.

The viscosity after sterilization treatment can be measured by the method described in the examples.

The pH of the liquid B after sterilization treatment is preferably 2.0 to less than 5.5, more preferably 3.0 to 5.2, and even more preferably 3.6 to 5.0.

The sourness of the jelly-containing beverage can thereby be limited to a range suitable for beverages while improving the strength of the jelly obtained by the gelation reaction. Furthermore, it will be possible to manufacture a jelly-containing beverage using acidic ingredients such as fruit juice.

In terms of the cations contained in the liquid B, appropriate cations can be selected depending on the gelling agent contained in the liquid A.

For example, when the gelling agent contained in liquid A is LM pectin, calcium ions can be selected as the cations contained in liquid B. Calcium ions may be derived from natural products such as milk, and may be added in the form of calcium lactate, calcium chloride, or the like.

In one embodiment, the liquid B includes no less than 4.5 mmol/L of calcium ions.

Within ranges in which the effects of the present invention are not compromised, the liquid B may also comprise components commonly used in the manufacture of jelly-containing beverages, other than the components described above. For example, sweeteners, acidulants, fruit juices, flavorings, colorants, preservatives, pH adjusters, emulsifiers, various stabilizers, solids (for example fruit, dietary fiber, nata de coco, and the like), antioxidants, nutritional fortifiers (vitamins or the like), lactic acid bacteria, oils/fats, skimmed milk powder, butter, processed skimmed condensed milk products, thickeners and the like may be included.

There are no limitations on the method for preparing the liquid B, and a base ingredient such as water or liquid sugar may be used as a solvent or dispersion medium, in which the cations and other components that are added as necessary may be mixed and dissolved or dispersed.

[Jelly-containing beverage]

The jelly-containing beverage according to one aspect of the present invention is manufactured by individually subjecting a liquid A comprising a cation reactive gelling agent and a liquid B comprising cations to sterilization treatment, then filling a container with the liquids A and B, and mixing liquid A and liquid B in the container.

The liquid A and the liquid B are thereby suitably mixed, and a jelly-containing beverage having a marbled appearance can be manufactured.

The jelly-containing beverage according to another aspect of the present invention is such that the jelly in the beverage and the liquid constituting the beverage present mutually different colors and present a marbled appearance.

Since the jelly in the beverage and the liquid constituting the beverage present mutually different colors, the marbling becomes more visible, resulting in a jelly-containing beverage with excellent aesthetics.

Furthermore, it is also possible to separate the jelly portion and liquid portion into different flavors, whereby complex tastes and textures can be made.

The jelly-containing beverage being "acidic" means that the liquid constituting the beverage is acidic.

In one embodiment, the pH of the liquid constituting the jelly-containing beverage is between 2.5 and 4.5.

The pH of the liquid constituting the jelly-containing beverage can be measured by the method described in the examples.

In one embodiment, the jelly in the beverage is a jelly formed by gelling a cation reactive gelling agent.

For example, one or more selected from the group consisting of pectin, carrageenan, gellan gum, and alginic acid can be mentioned as the cation reactive gelling agent but this is not particularly limited, as long as it is a gelling agent which has the property of reacting with cations to form a gel.

In one embodiment, the jelly-containing beverage comprises one or more selected from the group consisting of pectin, carrageenan, gellan gum, and alginic acid.

In one embodiment, the jelly-containing beverage further comprises calcium ions.

Within ranges in which the effects of the present invention are not compromised, the jelly-containing beverage may also comprise components commonly used in the manufacture of jelly-containing beverages, other than the components described above. For example, sweeteners, acidulants, fruit juices, flavorings, colorants, preservatives, pH adjusters, emulsifiers, various stabilizers, solids (for example fruit, dietary fiber, nata de coco, and the like), antioxidants, nutritional fortifiers (vitamins or the like), lactic acid bacteria, oils/fats, skimmed milk powder, butter, processed skimmed condensed milk products, thickeners and the like may be comprised.

**Examples**

Hereafter, the present invention will be described in detail by giving specific examples, but the present invention is not limited to the following examples.

For Example 1 and Comparative Example 1, the liquid A and the liquid B were prepared with various compositions and evaluated.

The physical properties of the liquid A and the liquid B were measured according to the following methods.

[pH]

pH measurements were performed after bringing the liquid temperature of a sterilized sample to 20°C, using a pH meter (MH-25R, made by DKK-TOA Corporation).

[Viscosity]

Viscosity measurements were performed by adjusting the liquid temperature of the sterilized sample to 25°C, and using a single cylinder rotational viscometer (TVB-15 Viscometer, made by Toki Sangyo Co., Ltd.), using an M1 rotor under conditions of 100 rpm.

[Brix]

Brix measurements were made by adjusting the liquid temperature of the sterilized sample to 20°C and using a Density Brix meter (DA-510C, made by Kyoto Electronics Manufacturing Co., Ltd.).

Example 1

[Preparation of the liquid A]

After dissolving liquid sugar in water, LM pectin and guar gum were added in that order and, after completely dissolving, water in which citric acid and sodium citrate were dissolved was added. Thereafter, strawberry juice, apple juice, lycopene pigment, and flavoring were added in this order, and water was added to obtain the composition shown in Table 1.

In the table, "remainder" means that, after adding all the starting ingredients other than water to the liquid sugar dissolved in water, water is added so as to reach a total of 100 mass%.

The liquid A was sterilized at 110°C for 30 seconds. Table 1 shows the evaluation results for the physical properties of the sterilized liquid A.

[Table 1]

| | | |
|---|---|---|
| Composition [mass%] | Liquid sugar | 13.00% |
| | LM pectin | 0.60% |
| | Guar gum | 0.10% |
| | Sodium citrate | 0.10% |
| | Citric acid | 0.25% |
| | Lycopene pigment | 0.10% |
| | Strawberry juice | 0.25% |
| | Apple juice | 2.75% |
| | Flavoring | 0.15% |
| | Water | Remainder |
| Evaluation | Brix [%] | 12.5 |
| | pH | 3.62 |
| | Viscosity [mPa·s] | 12.3 |

[Preparation of the liquid B]

After dissolving liquid sugar in water, HM pectin was added and dissolved. Separately, skimmed milk powder and non-dairy creamer were dissolved in water, added to the HM pectin solution, and stirred for 10 minutes. Thereafter, water in which sodium citrate and citric acid were dissolved was added, and this was further stirred for 10 minutes. Flavoring was added and water was added to give the composition shown in Table 2. The calcium ion concentration in the liquid B was 4.6 mol/L. The calcium ion concentration was analyzed by ICP atomic emission spectrometry.

The liquid B was sterilized at 110°C for 30 seconds. Table 2 shows the evaluation results for the physical properties of the sterilized liquid B.

[Table 2]

| Composition [mass%] | Liquid sugar | 13.80% |
|---|---|---|
| | Skimmed milk powder | 1.50% |
| | Non-dairy creamer | 1.90% |
| | HM pectin | 0.50% |
| | Citric acid | 0.25% |
| | Sodium citrate | 0.01% |
| | Flavoring | 0.10% |
| | Water | Remainder |
| Evaluation | Brix [%] | 12.4 |
| | pH | 3.65 |
| | Viscosity [mPa·s] | 13.9 |

[Manufacturing the jelly-containing beverage]

A 270 mL PET container that had been sterilized in advance was aseptically filled with 135 g of the liquid A at 25°C.

Next, the container was aseptically filled with 135 g of the liquid B at 25°C. As a result of filling with the liquid B, the liquid B and the liquid A came into contact with each other while being mixed in the container, and gelation occurred locally, manufacturing a jelly-containing beverage.

[Evaluation of the jelly-containing beverage]

The appearance after filling with liquid A and liquid B was observed. The result is shown in Figure 1.

The jelly-containing beverage in Example 1 could be confirmed as having a marbled appearance in which, in addition to the jelly portion, which set in a shape in which streamline shapes are overlapped and intertwined, a beverage portion is present as a liquid. Without intending to be bound by theory, it is thought the calcium ions in the skimmed milk powder caused the galacturonic acid moiety in one molecular chain of LM pectin to bond with the galacturonic acid moiety in another molecular chain of LM pectin via the calcium, such that gelation occurred. This gelation occurred in conjunction with the mixing of the two liquids as they were filled, resulting in an irregularly shaped jelly that allows for a novel marbled appearance that could not be achieved with conventional jelly-containing beverages.

The pH of the liquid portion of the jelly-containing beverage in Example 1 was 3.6. The pH measurement was performed using a pH meter (MH-25R, made by DKK-TOA Corporation), by separating the jelly-containing beverage into jelly and liquid, and then adjusting the liquid temperature of the liquid portion to 20°C.

Comparative Example 1

[Preparation of the liquid A]

After dissolving liquid sugar in water, LM pectin and guar gum were added in that order and, after completely dissolving, water in which citric acid and sodium citrate were dissolved was added. Then, strawberry juice, apple juice, and water for dissolving calcium lactate, which is a poorly soluble calcium salt, were added in that order, after which lycopene pigment, flavoring, and silicon were added, and water was added so at to arrive at the composition shown in Table 3.

The liquid A was sterilized at 110°C for 30 seconds. Since the liquid A comprised calcium lactate, which is a poorly soluble calcium salt, after the sterilization process, a thick and slightly smooth semi-liquid jelly was formed, such that the jelly portion and the beverage portion were vertically separated, which was not suitable for manufacturing a jelly-containing beverage. For this reason, measurements of the physical properties, preparation of the liquid B, and manufacture of a jelly-containing beverage were not performed.

In Table 3, "-" means that no measurement was performed.

[Table 3]

| Composition [mass%] | Liquid sugar | 9.00% |
| --- | --- | --- |
| | LM pectin | 0.60% |
| | Guar gum | 0.10% |
| | Calcium lactate | 0.05% |
| | Sodium citrate | 0.10% |
| | Citric acid | 0.25% |
| | Antioxidant | 0.05% |
| | Lycopene pigment | 0.10% |
| | Strawberry juice | 0.25% |
| | Apple juice | 2.75% |
| | Flavoring | 0.15% |
| | Silicon | 0.001% |
| | Water | Remainder |
| Evaluation | Brix [%] | - |
| | pH | - |
| | Viscosity [mPa·s] | - |

**Industrial Applicability**

By virtue of the present invention, it is possible to provide a method for manufacturing a jelly-containing beverage having multiple liquid colors using an acidic solution. With the method for manufacturing a jelly-containing beverage of the present invention, a jelly-containing beverage having a marbled appearance can be manufactured, and has good industrial applicability.

Furthermore, the jelly-containing beverage of the present invention is a jelly-containing beverage in which the jelly in the beverage and the liquid constituting the beverage present mutually different colors and present a marbled appearance, which presents an appearance unlike conventional jelly-containing beverages, and therefore has good industrial applicability.

Although some embodiments and/or examples of the present invention have been described in detail above, it will be easy for those skilled in the art to make many changes to these exemplary embodiments and/or examples without substantially departing from the novel teachings and effects of the present invention. Accordingly, these many changes are within the scope of the present invention.

The documents mentioned in this specification and the contents of the application serving as the basis for priority of this application under the Paris Convention are all incorporated by reference.

**Claims**

1. A method for manufacturing a packaged jelly-containing beverage comprising:
   individually subjecting a liquid A containing a cation reactive gelling agent and a liquid B containing cations to sterilization treatment, then filling the same container with the liquids A and B, and mixing the liquid A and liquid B in the container to manufacture a jelly-containing beverage, wherein:

the liquid A is substantially free of poorly soluble calcium salts;

the pH of the liquid A after sterilization treatment is 2.0 to less than 5.5;

the viscosity of the liquid A after sterilization treatment, measured at a temperature of 25°C, using a single cylinder rotational viscometer, is 5 mPa·s to 150 mPa·s; and

the viscosity of the liquid B after sterilization treatment, measured at a temperature of 25°C, using a single cylinder rotational viscometer, is 10 mPa·s to less than 50 mPa·s.

2. The manufacturing method according to claim 1, wherein the liquid constituting the jelly-containing beverage has a pH of 2.5 to 4.5.

3. The manufacturing method according to claim 1 or 2, wherein the pH of the liquid A before sterilization treatment is 2.0 to less than 6.5.

4. The manufacturing method according to any of claims 1 to 3, wherein the amount of the cation reactive gelling agent in the liquid A is 0.1 mass% to 2.0 mass%.

5. The manufacturing method according to any of claims 1 to 4, wherein the cation reactive gelling agent comprises one or more selected from the group consisting of pectin, carrageenan, gellan gum, and alginic acid.

6. The manufacturing method according to any of claims 1 to 5, wherein the liquid B comprises 4.5 mmol/L or more of calcium ions.

7. The manufacturing method according to any of claims 1 to 6, wherein the specific gravity $SG_A$ of the liquid A and the specific gravity $SG_B$ of the liquid B satisfy the following formula (1).

$$SG_A/SG_B > 1 \qquad (1)$$

8. The manufacturing method according to claim 7, wherein the container is filled with the liquid B after being filled with the liquid A.

9. The manufacturing method according to any of claims 1 to 6, wherein the specific gravity $SG_A$ of the liquid A and the specific gravity $SG_B$ of the liquid B satisfy the following formula (2).

$$SG_A/SG_B < 1 \qquad (2)$$

10. The manufacturing method according to claim 9, wherein the container is filled with the liquid A after being filled with the liquid B.

11. The manufacturing method according to any of claims 1 to 10, wherein the color of the liquid A and the color of the liquid B are different.

12. The manufacturing method according to any of claims 1 to 11, wherein the temperature of the liquid A when filling the container is no higher than the gelling temperature of the cation reactive gelling agent.

13. The manufacturing method according to any of claims 1 to 12, wherein the amount of the liquid A, with respect to the total of the liquid A and the liquid B, is 70 mass% or less.

14. A packaged jelly-containing beverage manufactured by the manufacturing method according to any of claims 1 to 13.

15. A packaged jelly-containing beverage,
wherein a jelly in the beverage and a liquid constituting the beverage present mutually different colors and present a marbled appearance.

16. The beverage according to claim 15, wherein the liquid constituting the jelly-containing beverage has a pH of 2.5 to 4.5.

17. The beverage according to claim 15 or 16, wherein the jelly is formed by gelling a cation reactive gelling agent.

**18.** The beverage according to any of claims 15 to 17, comprising one or more selected from the group consisting of pectin, carrageenan, gellan gum, and alginic acid.

**19.** The beverage according to claim 18, further comprising calcium ions.

**20.** The beverage according to any of claims 15 to 19, wherein the container is made from PET.

[FIG. 1]

## INTERNATIONAL SEARCH REPORT

International application No.

**PCT/JP2022/021092**

### A. CLASSIFICATION OF SUBJECT MATTER

*A23L 2/00*(2006.01)i
FI:   A23L2/00 A

According to International Patent Classification (IPC) or to both national classification and IPC

### B. FIELDS SEARCHED

Minimum documentation searched (classification system followed by classification symbols)

A23L2/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-105734 A (SNOW BRAND MILK PRODUCTS CO., LTD.) 16 June 2016 (2016-06-16) claim 1, paragraph [0010], examples, table 3, fig. 5, 6, 11 | 15, 17-19 |
| Y | | 16, 20 |
| A | | 1-14 |
| Y | WO 2004/010796 A1 (OTSUKA PHARMACEUTICAL CO., LTD.) 05 February 2004 (2004-02-05) page 3, lines 21-30, page 5, lines 4-6 | 16, 20 |
| A | | 1-14 |
| Y | JP 2013-135665 A (KIRIN BEVERAGE CORP.) 11 July 2013 (2013-07-11) paragraphs [0036], [0038] | 20 |
| A | | 1-14 |
| Y | JP 2009-55879 A (SUNTORY LTD.) 19 March 2009 (2009-03-19) paragraph [0040] | 20 |
| A | | 1-14 |

☑ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2022/021092** |

**C.     DOCUMENTS CONSIDERED TO BE RELEVANT**

| Category* | Citation of document, with indication, where appropriate, of the relevant passages | Relevant to claim No. |
|---|---|---|
| A | JP 2016-189738 A (SNOW BRAND MILK PRODUCTS CO., LTD.) 10 November 2016 (2016-11-10)<br>claims, paragraphs [0017], [0018] | 1-20 |
| A | JP 2016-202158 A (KYOKUTO KAGAKU SANGYO KK) 08 December 2016 (2016-12-08)<br>claims | 1-20 |

Form PCT/ISA/210 (second sheet) (January 2015)

## INTERNATIONAL SEARCH REPORT
### Information on patent family members

International application No.

**PCT/JP2022/021092**

| Patent document cited in search report | | | Publication date (day/month/year) | Patent family member(s) | Publication date (day/month/year) |
|---|---|---|---|---|---|
| JP | 2016-105734 | A | 16 June 2016 | (Family: none) | |
| WO | 2004/010796 | A1 | 05 February 2004 | US 2005/0260322 A1 paragraphs [0002]-[0004], [0028]<br>EP 1541042 A1<br>CN 1671300 A | |
| JP | 2013-135665 | A | 11 July 2013 | (Family: none) | |
| JP | 2009-55879 | A | 19 March 2009 | (Family: none) | |
| JP | 2016-189738 | A | 10 November 2016 | (Family: none) | |
| JP | 2016-202158 | A | 08 December 2016 | (Family: none) | |

Form PCT/ISA/210 (patent family annex) (January 2015)

**EP 4 353 085 A1**

## REFERENCES CITED IN THE DESCRIPTION

**Patent documents cited in the description**

- JP 2016189738 A
- JP 2019054744 A